# EUROPEAN PATENT SPECIFICATION

(11) **EP 3 138 709 B1**
(45) Date of publication and mention of the grant of the patent: **09.05.2018**
(21) Application number: 15183992.5
(22) Date of filing: 07.09.2015
(51) Int. Cl.: B60H 1/00, F28F 1/00, F28D 1/00, F28D 1/053, F28F 9/02

(54) **AIR-CONDITIONING SYSTEM AND A HEAT EXCHANGER FOR SUCH AN AIR-CONDITIONING SYSTEM**
KLIMAANLAGENSYSTEM UND WÄRMETAUSCHER FÜR SOLCH EIN KLIMAANLAGENSYSTEM
SYSTÈME DE CLIMATISATION ET ÉCHANGEUR DE CHALEUR POUR UN TEL SYSTÈME

(43) Date of publication of application: 08.03.2017
(73) Proprietor: Volvo Car Corporation, 40 531 Göteborg (SE)
(72) Inventor: Sam, Gullman, 41717 Göteborg (SE)
(74) Representative: Volvo Car Corporation

(56) References cited:
- WO-A1-03/033984
- WO-A1-2006/028296
- GB-A- 2 351 800
- JP-A- H10 267 462
- JP-A- H10 325 645
- JP-A- 2010 151 381
- JP-A- 2014 214 903

## Description

### TECHNICAL FIELD

The invention relates to an air-conditioning system for vehicles and a heat exchanger, in particular an evaporator used in such an air-conditioning system.

### BACKGROUND

Motor vehicles are often provided with heating and cooling installations, such as air conditioning (AC) installations. An AC-installation comprises an evaporator which is used as a source of cold when the installation is operating in a cooling mode to supply cold air to the passenger cabin or other compartments in the vehicle.

A basic AC-installation for the cabin of a motor vehicle comprises a refrigerant fluid circuit having several conduits, with an evaporator and a compressor being connected in one branch, with the compressor downstream of the evaporator. A condenser is arranged in a second conduit upstream of the evaporator. An expansion device is interposed in the conduit between the condenser and the evaporator. Finally, the installation also includes means for passing air into the cabin of the vehicle after the air has undergone heat exchange with the evaporator.

In operation, circulating refrigerant vapor enters the compressor, located in the engine bay, and is compressed to a higher pressure, resulting in a higher refrigerant temperature. The hot, compressed refrigerant vapor is now at a temperature and pressure at which it can be condensed and is routed through a condenser, usually located in front of or adjacent the vehicle radiator. The refrigerant is cooled by ambient air flowing across condenser coils and is condensed into a liquid. In this way the circulating refrigerant rejects heat from the system and the heat is carried away by the ambient air.

The condensed and pressurized liquid refrigerant is next routed through an expansion valve where it undergoes an abrupt reduction in pressure. The pressure reduction results in flash evaporation of a part of the liquid refrigerant, lowering its temperature. The cold two-phase refrigerant is then routed through the evaporator which is located in or adjacent the passenger cabin. The air to be cooled is blown across refrigerant conduits or tubes in the evaporator, causing the remaining liquid part of the cold refrigerant mixture to evaporate, further lowering the temperature of the ambient air passing through the evaporator. The air cooled by the evaporator is supplied to the passenger cabin. To complete the refrigeration cycle, the refrigerant vapor is routed from the evaporator back into the compressor. The compressor can be driven by the car's engine via a suitable transmission or by an electric motor.

An example of an evaporator used in an AC-installation is described in US 2007/144715. According to this document, refrigerant is supplied to an upper header of a first end of the evaporator, where after it flows in alternate directions between the upper and a lower header in a transverse direction to a second end of the evaporator. The refrigerant is then returned to the first end of the evaporator in the same way, but at the opposite side of the evaporator.

A problem with an evaporator of this type is that the liquid part of the refrigerant entering the evaporator may evaporate completely before reaching the outlet, resulting in the refrigerant becoming superheated. The resulting pressure difference between the inlet and outlet of the evaporator causes an undesirable increase in flow resistance. A further problem is that the flow resistance through the consecutive conduits from the inlet to the outlet can be relatively large in itself. Another evaporator of a known type is disclosed in WO 2006/028296, which is considered as the closest prior art. The object of the invention is to provide an improved evaporator that solves the above problems.

### SUMMARY

The object is achieved by an evaporator and an air-conditioning system for vehicles according to the appended claims.

According to the invention, an air conditioning installation for an interior compartment of a motor vehicle comprises a refrigerant fluid circuit having a first branch containing an evaporator and a compressor arranged downstream of the evaporator. A second branch comprises a condenser arranged downstream of the compressor, which second branch also contains a first expansion device located between the condenser and the evaporator. The installation further including means for directing air into the cabin, which air has exchanged heat with the evaporator.

The terms "upstream" and "downstream" are used for indicating the location of a component in relation to the direction of flow of ambient air through the evaporator, or in relation to the direction of flow of refrigerant in conduits or tubes through the evaporator. In the figures, the direction of flow of ambient air is indicated by an arrow A throughout. Ambient air can be induced past the evaporator by a blower that forces the air through an air flow clearance between each adjacent pair of heat exchange conduits or tubes. According to the invention, the evaporator comprises a pair of adjacent heat exchangers, hereafter termed cores, mounted in close proximity or together or as a unit. A core can, for instance, comprise tubes with attached cooling fins between which ambient air flows. In the subsequent text the cores are described as being arranged "overlapping", which term denotes that the cores are arranged one after the other forming a front and a rear core. The front core is located facing the flow of ambient air, so that the air flows through the front core and the rear core in that order. Consequently, each of the respective upper, lower and side surfaces of the cores are located at or substantially at right angles to the direction of flow of ambient air.

According to one embodiment, the invention relates to an evaporator comprising a first core and a second core, where the first core is arranged downstream of and overlapping the second core in an air flow direction through the evaporator. The first core comprises a first upper tank at a first end of the evaporator and a first lower tank at a second end of the evaporator. The first and second tanks are located at opposed sides of the evaporator and are joined by multiple conduits or tubes arranged in parallel between the first upper and lower tanks. The conduits can comprise tubes or other suitable fluid conducting means and are configured to connect the upper and lower tanks of the first core to each other and to allow fluid communication between the first upper and lower tanks. A refrigerant inlet is arranged at the first end of the evaporator and connected to the first upper tank. The second core comprises a second upper tank at the first end of the evaporator and a second lower tank at the second end of the evaporator. The first and second tanks are joined by multiple conduits arranged in parallel between the second upper and lower tanks. The conduits are configured to connect the upper and lower tanks of the second core to each other and to allow fluid communication between the upper and lower tanks. The first upper tank is connected to the second upper tank to allow fluid communication between the upper tanks of the first and second cores. A refrigerant outlet is arranged at the first end of the evaporator and connected to the second upper tank.

The first and second upper tanks can be provided with partitions arranged inside the respective upper tank. A first set of partitions is configured to divide the first upper tank into a first path in which refrigerant supplied through the refrigerant inlet is directed from the first upper tank to the first lower tank. A second path, that is downstream from the first path, is directed from the first lower tank to the first upper tank on either side of the first path. In this way the flow of refrigerant from the first path is split into two parallel second paths directing equal volumes of refrigerant from two lower side portions of the first core upwards to two upper side portions of the first core on either side of the first path. A second set of partitions is configured to divide the second upper tank into a third path in which refrigerant supplied into the second upper tank from the first upper tank is directed from the second upper tank to the second lower tank. In this way the flow of refrigerant from the split second path is continued as a split flow into two parallel third paths directing equal volumes of refrigerant from two side portions of the second upper tank the second core. The third path, that is downstream from the second path, is directed from the second upper tank to the second lower tank on either side of a fourth path. Finally, the fourth path is directed from the second lower tank and between the second set of partitions in the second upper tank to the refrigerant outlet at the second upper tank.

According to a first alternative example, the second path of the first core can be split into two parallel paths having the same number of fluid conduits. In addition, the number of fluid conduits in the second path of the first core is equal to or greater than the number of fluid conduits in the first path. The number of fluid conduits in the second path of the first core can be up to and including twice the number of fluid conduits in the first path. In this context, the number of conduits in the second path is the combined number of conduits in the parallel flow paths. According to a further example, the dimensions of all fluid conduits in the first core are the same.

According to a second alternative example, the third path of the second core can be split into two parallel paths having the same number of fluid conduits. In addition, the number of fluid conduits in the third path is equal to or greater than the number of fluid conduits in the fourth path. The number of fluid conduits in the third path can be up to and including twice the number of fluid conduits in the fourth path. According to a further example, the dimensions of all fluid conduits in the second core are the same.

The dimensions of the fluid conduits in the second core are preferably, but not necessarily, the same as the dimensions of the fluid conduits in the first core. In addition, the number of fluid conduits in the second core is preferably, but not necessarily, the same as the number of conduits in the first core. If both these conditions apply, then the evaporator can comprise two identical and mirrored cores.

The invention further relates to an air conditioning unit comprising an evaporator as described above. The invention also relates to a vehicle comprising such an air conditioning unit.

An advantage with this arrangement is that the split flow allows for an evenly distributed temperature across the front and rear cores. By locating the initial refrigerant passes, comprising the first and parallel second paths, at the rear of the evaporator and splitting the flow in the transverse direction of the first core it is possible to provide an even temperature distribution and to prevent the liquid portion of the refrigerant from boiling off completely in the first core. The latter would cause relatively high temperatures and pressures in the first core, resulting in an undesirable pressure difference over the evaporator and an increase in flow resistance. The invention aims to avoid this and to improve the thermal efficiency of the evaporator. The described configuration provides a relatively low pressure drop across the evaporator which allows for lower refrigerant temperature and an improved performance for both the evaporator and the AC-system. The split flow in the transverse direction the second core, that is the parallel third path, further enhances an even temperature distribution across the evaporator and assists in controlling the evaporation of the refrigerant. One aim of the invention is to prevent the refrigerant from boiling off completely before the final pass, i.e. the fourth path, through the evaporator.

The invention allows for cost efficient manufacture of evaporators, in particular when using the same number of conduits and conduits having the same dimensions throughout each core. This arrangement allows the manufacture of an evaporator comprising two identical component parts which can be assembled and joined in a single process.

### BRIEF DESCRIPTION OF THE DRAWINGS

With reference to the appended drawings, below follows a more detailed description of embodiments of the invention cited as examples. In the drawings:
- Figure 1: shows a vehicle comprising an AC-installation according to the invention;
- Figure 2: shows a schematically illustrated fluid circuit for an AC-installation;
- Figure 3: shows a schematic plan view of an evaporator 330 according to the invention;
- Figure 4: shows a schematic cross-section through an evaporator according to the invention; and
- Figure 5: shows a perspective view of an evaporator according to the invention.

### DETAILED DESCRIPTION OF EXAMPLE EMBODIMENTS OF THE INVENTION

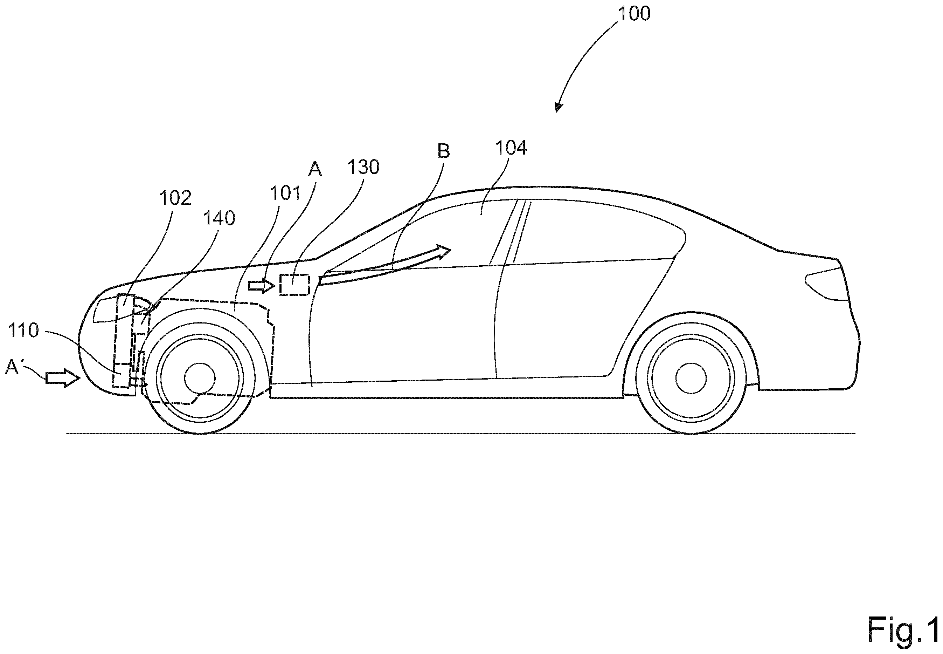

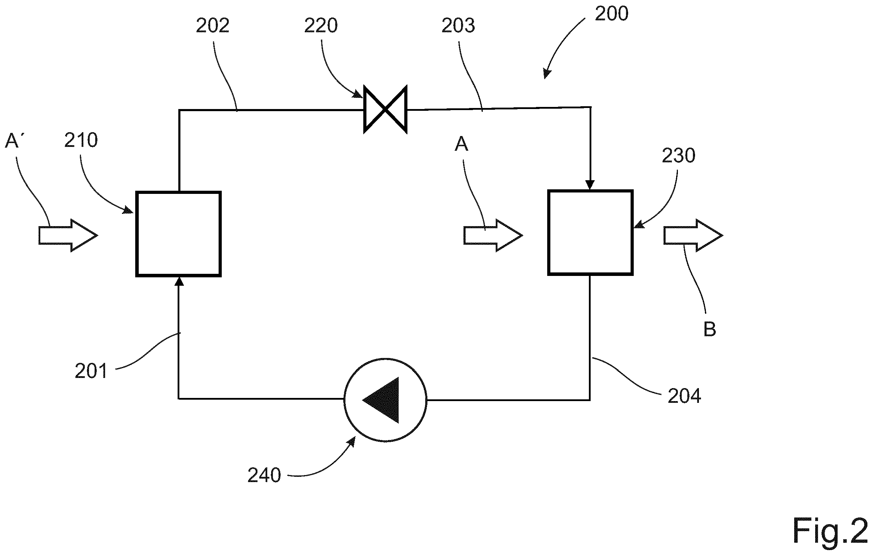

Figure 1 shows a schematically indicated vehicle 100 comprising an internal combustion engine 101 connected to a transmission (not shown) for driving a pair of front wheels. The vehicle 101 comprises a radiator 102 located at the front of the vehicle and exposed to a flow of ambient air A' for cooling the engine 101. Figure 1 further shows a schematic air conditioning (AC) installation for supplying a passenger compartment 104 with cooled or heated air. This basic AC-installation comprises a refrigerant fluid circuit having several conduits (not shown; see Fig.2) for a suitable refrigerant. The installation comprises a condenser 110 arranged adjacent the radiator 102, which condenser 110 is arranged upstream of an evaporator 130. A compressor 140 is connected to the fluid circuit between the evaporator 130 and the condenser 110. An expansion device (not shown) is arranged in the circuit between the condenser 110 and the evaporator 130. Finally, the installation also includes means, such as a blower (not shown), for drawing a flow of ambient air A through the evaporator 130 and passing a flow of heated or cooled air B into the passenger compartment 104 after the air has undergone heat exchange with the evaporator 130.

Figure 2 shows a schematically illustrated fluid circuit for an AC-installation as described in connection with Figure 1. The AC-installation comprises a refrigerant fluid circuit 200 having several conduits, which circuit comprises an evaporator 230 and a compressor 240 being connected in one conduit, with the compressor 240 located downstream of the evaporator 230. A condenser 210 is arranged in a second conduit upstream of the evaporator 230. An expansion device 220 is located in the conduit between the condenser 240 and the evaporator 230. Finally, the installation also includes a controllable means such as a blower (not shown) for drawing a flow of ambient air A through the evaporator 230 and passing a flow of air B into the passenger compartment of the vehicle after the air has undergone heat exchange with the evaporator 230.

In operation of the installation in a cooling mode, the refrigerant fluid delivered by the compressor 240 passes through a first conduit 201 to reach the condenser 210, in which the fluid is condensed so as to give up heat to the surrounding ambient air A' flowing through the condenser 210. The condensed fluid then passes through a second conduit 202 to the expansion device 220, where its pressure is abruptly reduced causing a flash evaporation of a part of the liquid fluid. The mixture of liquid and gaseous fluid passes through a third conduit 203 to the evaporator 230 where the remaining liquid fluid evaporates and cools a flow of ambient air A passing through the evaporator 230. The cooled air B is then passed into the cabin of the vehicle (see Fig.1). The gaseous fluid leaving the evaporator 230 passes through a fourth conduit 204 and is returned to the inlet of the compressor 240.

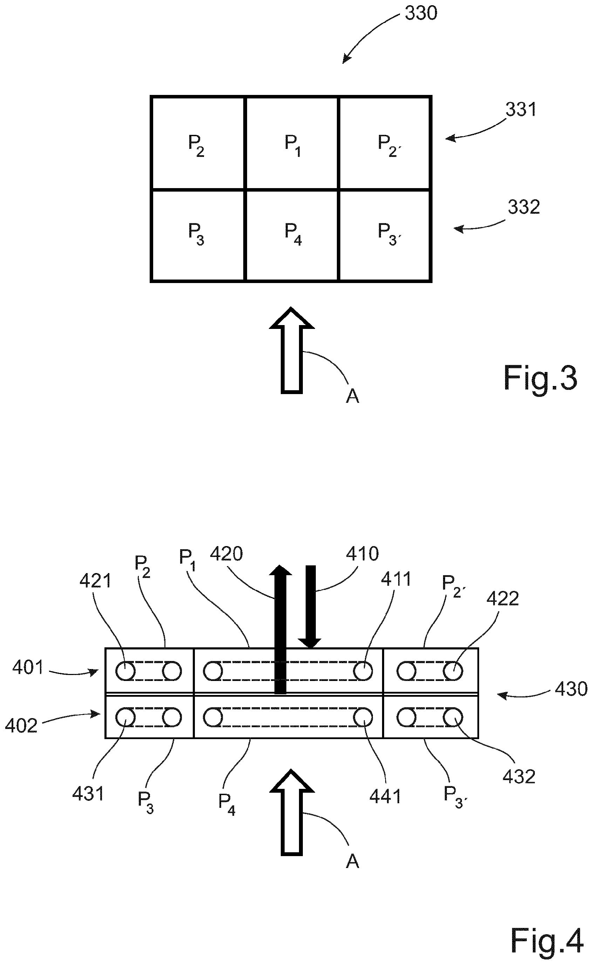

Figure 3 shows a schematic plan view of an evaporator 330 according to the invention. This figure merely indicates the general direction of fluid flow through the evaporator. The evaporator comprises a first and a second heat exchanger, hereafter termed first and second core 331, 332. In a preferred example the evaporator is made up of two identical components assembled and soldered or welded together as a unit. The cores 331, 332 are arranged "overlapping", wherein the first core 331 forms a rear core and the second core 332 forms a front core. The front core 332 is located facing the flow of ambient air A, so that the air flows through the front core 332 and the rear core 331 in that order. In this example each core is divided into three distinct portions, each portion representing a flow path for refrigerant through the evaporator.

Assuming that Figure 3 shows the evaporator 330 from above, refrigerant is directed into the evaporator 330 at a central portion of the first core 331. The refrigerant is supplied from an expansion device (not shown; see Fig.2) and comprises a mixture of liquid and vapour at a relatively low temperature. The refrigerant is directed in a first path P1 and flows from an upper central portion to a lower central portion of the first core 331. At the lower portion of the first core 331 the flow of refrigerant from the first path P1 is split into two parallel second paths P2, P2' directing equal volumes of refrigerant from two lower side portions of the first core 331 upwards to two upper side portions of the first core 331 on either side of the first path P1. The refrigerant is then directed into two corresponding upper side portions of the second core 332 and downwards into two parallel third paths P3, P3' directing equal volumes of refrigerant into two lower side portions of the second core 332. Finally, the split parallel third paths P3, P3' are merged at a lower central portion of the second core 332 to direct the refrigerant in a fourth path P4 from the lower central portion to a central upper portion of the second core 332 between the parallel third paths P3, P3'. The refrigerant removed from the evaporator 330 at the central upper portion of the second core 332 is ideally completely evaporated at this point. Evaporated refrigerant at an elevated temperature is then supplied to a compressor (not shown; see Fig.2) downstream of the evaporator 330.

An advantage with this arrangement is that the split flow allows for an evenly distributed temperature across the front and rear cores. By locating the initial refrigerant passes at the rear of the evaporator and splitting the flow in the transverse direction of each core it is possible to provide an even temperature distribution and to prevent the liquid portion of the refrigerant from boiling off completely in the first core. The latter would cause relatively high temperature difference between the two-phase refrigerant and the boiled off gas in the second core, resulting in an undesirable uneven temperature distribution. The configuration of the evaporator according to the invention reduces the pressure difference over the evaporator, allowing the temperature of the two-phase refrigerant to be lowered and the performance of the evaporator to be improved.

Figure 4 shows a schematic cross-section through an evaporator 430 according to the invention, at right angles to the refrigerant conduits in each core 401, 402. As in Figure 3, the evaporator comprises a first and a second core 401, 402. The evaporator 430 is made up of two identical and overlapping components assembled and soldered or welded together as a unit. The first core 401 forms a rear core and the second core 402 forms a front core. The front core 402 is located facing the flow of ambient air A, so that the air flows through the front second core 402 and the rear first core 401 in that order. The first core 401 is connected to an inlet 410 supplying refrigerant as a mixture of liquid and vapour from an expansion device (not shown; see Fig.2). The second core 402 is connected to an outlet 420 supplying evaporated refrigerant to a compressor (not shown; see Fig.2).

Each core 401, 402 is divided into three distinct portions 411, 421, 422 and 431, 432, 441, respectively, each portion representing a flow path for refrigerant through the evaporator 430. Figure 4 shows an evaporator where the inlet 410 and the outlet 420 are located at an upper side of the evaporator 430, but the invention is not limited to this embodiment. Refrigerant entering the first core 401 through the inlet 410 is directed in a first path P1 and flows through multiple conduits 411 from an upper central portion to a lower central portion of the first core 401. These upper and lower portions of a core are also referred to as tanks or headers. At the lower portion of the first core 401 the flow of refrigerant is split into two parallel second paths P2, P2' directing equal volumes of refrigerant through multiple conduits 421, 422 from two lower side portions of the first core 401 upwards to two upper side portions of the first core 401 on either side of the first path P1. The refrigerant paths are then directed from the first core 401 into two corresponding upper side portions of the second core 402. From the upper side portions the refrigerant flows downwards into two parallel third paths P3, P3' directing equal volumes of refrigerant through multiple conduits 431, 432 into two lower side portions of the second core 402. Finally, the split parallel third paths P3, P3' are merged at a lower central portion of the second core 402 to direct the refrigerant in a fourth path P4 from the lower central portion to a central upper portion of the second core 402 between the parallel third paths P3, P3'. Evaporated refrigerant at an elevated temperature leaves the second core 402 through the outlet 420 and is supplied to a compressor (not shown; see Fig.2) downstream of the evaporator 330.

According to the invention the number of fluid conduits in the split second paths P2, P2' of the first core 401 can be equal to or greater than the number of fluid conduits in the first path P1. The example shown in Figure 4 indicates a first core 401 where the number of conduits in the second path P2, P2' is up to twice the number of fluid conduits in the first path P1. By selecting the number of conduits to be the same in both the first path P1 and the parallel second paths P2, P2' and by using conduits having the same dimensions, the total cross-sectional flow area remains the same through the first core 401. Figure 4 shows an example where both cores 401, 402 have the same number and size of conduits.

The number and distribution of conduits in each core can be selected depending on design constraints on the evaporator. For example, an evaporator intended for a mid-size automobile can have the outer dimensions selected so that the width is 250 mm, the height is 250 mm and the total thickness is 50 mm. If two identical cores are used, then the single core thickness is 25 mm. The number of tubes in a single core can be selected to provide a predetermined capacity, for instance 27 tubes.

When each core has three passes, e.g. corresponding to the first and split second paths, then examples of tube configurations across a single core can be, for instance, 7-13-7; 8-11-8 or 9-9-9. Here, the first configuration states that the first (or fourth) path comprises 13 tubes and the combined second (or combined third) path comprises 14 tubes, that is, the cross-sectional area is maintained substantially constant through the core. By varying the number and/or the dimensions of the tubes in each path the core can be designed to provide the desired properties.

For reasons of cost efficient manufacture it is an advantage to use the same number of conduits and conduits having the same dimensions throughout each core. This arrangement allows the manufacture of an evaporator comprising two identical and mirrored cores. In the case of the example shown in Figure 4, one core has been rotated 180° about its central vertical axis prior to assembly and joining. As indicated in the figure, this also provides a suitable indexing of the inlet and outlet at the top of the evaporator. Although the figures indicate inlets and outlets arranged together at the top of the evaporator, other arrangements are possible. Hence the inlet and outlet can be located at any suitable outer delimiting side edge of an evaporator and need not be located together.

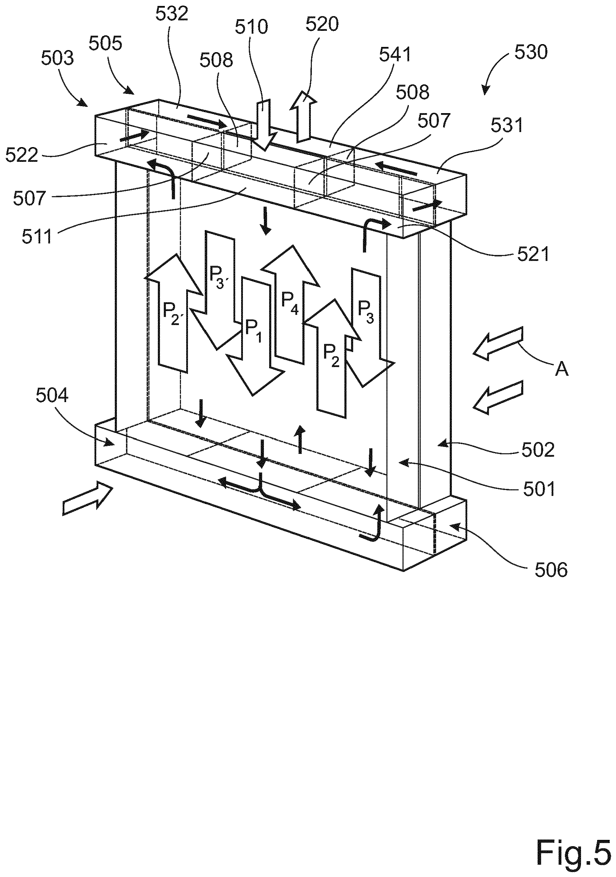

Figure 5 shows a perspective view of an evaporator 530 according to the invention. Similar to the evaporator in Figure 4, the evaporator 530 comprises a first and a second core 501, 502. The first core 501 forms a rear core and the second core 502 forms a front core relative to the direction of flow of ambient air A. The first core 501 comprises an upper tank 503 and a lower tank 504 connected by groups of fluid conduits (not shown; see Fig.4), wherein a central portion 511 of the upper tank 503 is connected to a schematically indicated inlet 510 for refrigerant supplied from an expansion device (not shown; see Fig.2). The second core 502 comprises an upper tank 505 and a lower tank 506 connected by groups of fluid conduits (not shown; see Fig.4), wherein a central portion 541 of the upper tank 505 is connected to a schematically indicated outlet 520 supplying evaporated refrigerant to a compressor (not shown; see Fig.2).

Each core 501, 502 is divided into three distinct portions, each portion representing a flow path P1; P2, P2'; P3, P3'; P4 for refrigerant through the evaporator 530. The inlet 510 and the outlet 520 are located at an upper side of the evaporator 530. Refrigerant entering the first core 501 through the inlet 510 is directed from the central portion 511 of the upper tank 503 into a first path P1 and flows through multiple conduits to a central portion of the lower tank 504 of the first core 501. In the lower tank 504 of the first core 501 the flow of refrigerant is split into two parallel second paths P2, P2' directing equal volumes of refrigerant through multiple conduits from each side portion of the lower tank 504 upwards to two side portions 521, 522 of the upper tank 503 of the first core 501 on either side of the first path P1 and the central portion 511 of the upper tank 503. The upper tank 503 is provided with a pair of subdividing partitions or internal walls 507 separating the central portion 511 from side portions 521, 522 of the upper tank 503 of the first core 501. The lower tank 504 is not provided with subdividing internal walls, but can optionally be provided with suitable flow guiding means. The refrigerant from the parallel second paths P2, P2' is directed from the side portions 521, 522 of the upper tank 503 of the first core 501 into two corresponding side portions 531, 532 of the upper tank 505 of the second core 502 via openings in adjacent walls of the respective upper tanks 503, 505. From these side portions 531, 532 of the upper tank 505 of the second core 502 the refrigerant flows downwards into two parallel third paths P3, P3' directing equal volumes of refrigerant through multiple conduits (not shown; see Fig.4) into two side portions of the lower tank 506 of the second core 502. Finally, the split parallel third paths P3, P3' are merged at a central portion of the lower tank 506 of the second core 502 to direct the refrigerant in a fourth path P4 from the central portion of the lower tank 506 to a central portion 541 of the upper tank 505 of the second core 502 between the parallel third paths P3, P3' and the side portions 531, 532 of the upper tank 505. The upper tank 503 is provided with a pair of subdividing partitions or internal walls 508 separating the central portion 511 from side portions 521, 522 of the upper tank 503 of the first core 501. Evaporated refrigerant at an elevated temperature leaves the second core 502 through the schematically indicated outlet 520 connected to the central portion 511 and is supplied to a compressor (not shown; see Fig.2) downstream of the evaporator 530.

It is to be understood that the present invention is not limited to the embodiments described above and illustrated in the drawings; rather, the skilled person will recognize that many changes and modifications may be made within the scope of the appended claims.

## Claims

1. An evaporator (130; 230; 330; 430; 530) comprising a first core (331; 401; 501); and a second core (332; 402; 502), the first core (331; 401; 501) being arranged downstream of and overlapping the second core (332; 402; 502) in an air flow direction through the evaporator, the first core (331; 401; 501) comprising:
- a first upper tank (503) at a first end of the evaporator;
- a first lower tank (504) at a second end of the evaporator;
- multiple conduits (411, 421, 422) arranged in parallel between the first upper and lower tanks (503, 504), the conduits being configured to connect the upper and lower tanks to each other and to allow fluid communication between the first upper and lower tanks;
- a refrigerant inlet (410; 510) arranged at the first end of the evaporator and connected to the first upper tank (503);
the second core (332; 402; 502) comprising:
- a second upper tank (505);
- a second lower tank (506);
- multiple conduits (431, 432, 441) arranged in parallel between the second upper and lower tanks (505, 506), the conduits being configured to connect the upper and lower tanks to each other and to allow fluid communication between the upper and lower tanks;
- the first upper tank (503) being connected to the second upper tank (505) to allow fluid communication between the upper tanks; and
- a refrigerant outlet (420; 520) arranged at the first end of the evaporator and connected to the second upper tank (505); wherein partitions are arranged inside the first and second upper tanks (503, 505); a first set of partitions is configured to divide the first upper tank (503) into a first path (P1) in which refrigerant supplied through the refrigerant inlet (410; 510) is directed from the first upper tank (503) to the first lower tank (504); **characterized in that** a second path (P2, P2'), downstream from the first path (P1), is directed from the first lower tank (504) to the first upper tank (503) on either side of the first path (P1),
that a second set of partitions is configured to divide the second upper tank (505) into a third path (P3, P3') in which refrigerant supplied from the first upper tank (503) is directed from the second upper tank (505) to the second lower tank (506);
that the third path (P3, P3'), that is downstream from the second path (P2, P2'), is directed from the second upper tank (505) to the second lower tank (506) on either side of a fourth path (P4); and
that the fourth path (P4) is directed from the second lower tank (506) and between the second set of partitions to the refrigerant outlet (420; 520) at the second upper tank (505).

2. An evaporator according to claim 1, **characterized in that** the second path (P2, P2') of the first core (331; 401; 501) is split into two parallel paths having the same number of fluid conduits.

3. An evaporator according to claim 1 or 2, **characterized in that** the number of fluid conduits in the second path (P2, P2') of the first core (331; 401; 501) is equal to or greater than the number of fluid conduits in the first path (P1).

4. An evaporator according to claim 3, **characterized in that** the number of fluid conduits in the second path (P2, P2') of the first core is up to twice the number of fluid conduits in the first path (P1).

5. An evaporator according to any one of the above claims, **characterized in that** the third path (P3, P3') of the second core (332; 402; 502) is split into two parallel paths having the same number of fluid conduits.

6. An evaporator according to claim 1 or 5, **characterized in that** the number of fluid conduits in the third path (P3, P3') is equal to or greater than the number of fluid conduits in the fourth path (P4).

7. An evaporator according to claim 6, **characterized in that** the number of fluid conduits in the third path (P3, P3') is up to twice the number of fluid conduits in the fourth path (P4).

8. An evaporator according to any one of the above claims, **characterized in that** the dimensions of all fluid conduits in the first core (331; 401; 501) are the same.

9. An evaporator according to any one of the above claims, **characterized in that** the dimensions of all fluid conduits in the second core (332; 402; 502) are the same.

10. An evaporator according to claim 9, **characterized in that** the dimensions of the fluid conduits in the second core (332; 402; 502) are the same as the dimensions of the fluid conduits in the first core (331; 401; 501).

11. An evaporator according to any one of the above claims, **characterized in that** the number of fluid conduits in the second core (332; 402; 502) is the same as the number of conduits in the first core (331; 401; 501).

12. An evaporator according to any one of the above claims, **characterized in that** the evaporator comprises two identical and mirrored cores.

13. An air conditioning unit comprising an evaporator according to claims 1-12.

14. A vehicle comprising an air conditioning unit according to claim 13.

## Patentansprüche

1. Verdampfer (130; 230; 330; 430; 530), der einen ersten Kern (331; 401; 501) und einen zweiten Kern (332; 402; 502) umfasst; wobei der erste Kern (331; 401; 501) in einer Luftstromrichtung durch den Verdampfer nachgeschaltet zu dem zweiten Kern angeordnet ist (332; 402; 502) und diesen überlappt, wobei der erste Kern (331; 401; 501) umfasst:
- einen ersten oberen Tank (503) an einem ersten Ende des Verdampfers;
- einen ersten unteren Tank (504) an einem zweiten Ende des Verdampfers;
- Mehrfachleitungen (411, 421, 422), die parallel zwischen dem ersten oberen und dem ersten unteren Tank (503, 504) angeordnet sind, wobei die Leitungen konfiguriert sind, um den oberen und den unteren Tank miteinander zu verbinden und um eine Strömungsverbindung zwischen dem ersten oberen und dem ersten unteren Tank zu erlauben;
- einen Kühlmitteleinlass (410; 510), der an dem ersten Ende des Verdampfers angeordnet ist und mit dem ersten oberen Tank (503) verbunden ist;
wobei der zweite Kern (332; 402; 502) umfasst:
- einen zweiten oberen Tank (505);
- einen zweiten unteren Tank (506);
- Mehrfachleitungen (431, 432, 441), die parallel zwischen dem zweiten oberen und dem zweiten unteren Tank (505, 506) angeordnet sind, wobei die Leitungen konfiguriert sind, um den oberen und den unteren Tank miteinander zu verbinden und um eine Strömungsverbindung zwischen dem oberen und dem unteren Tank zu erlauben;
- wobei der erste obere Tank (503) mit dem zweiten obere Tank (505) verbunden ist, um eine Strömungsverbindung zwischen den oberen Tanks zu erlauben; und
- einen Kühlmittelauslass (420; 520), der an dem ersten Ende des Verdampfers angeordnet ist und mit dem zweiten oberen Tank (505) verbunden ist;
wobei in dem ersten und in dem zweiten oberen Tank (503, 505) Trennwände angeordnet sind; wobei eine erste Gruppe von Trennwänden konfiguriert ist, um den ersten oberen Tank (503) in einen ersten Pfad (P1) zu teilen, in den ein Kühlmittel durch den Kühlmitteleinlass (410; 510) zugeführt wird und der von dem ersten oberen Tank (503) zu dem ersten unteren Tank (504) gerichtet ist;
**dadurch gekennzeichnet,**
**dass** ein zweiter Pfad (P2, P2') nachgeschaltet zu dem ersten Pfad (P1) auf jeder Seite des ersten Pfads (P1) von dem ersten unteren Tank (504) zu dem ersten oberen Tank (503) gerichtet ist,
**dass** eine zweite Gruppe von Trennwänden konfiguriert ist, um den zweiten oberen Tank (505) in einen dritten Pfad (P3, P3') zu teilen, in den das Kühlmittel aus dem ersten oberen Tank (503) zugeführt wird und der von dem zweiten oberen Tank (505) zu dem zweiten unteren Tank (506) gerichtet ist;
**dass** der dritte Pfad (P3, P3'), der nachgeschaltet zu dem zweiten Pfad (P2, P2') ist, auf jeder Seite eines vierten Pfads (P4) von dem zweiten oberen Tank (505) zu dem zweiten unteren Tank (506) gerichtet ist; und
**dass** der vierte Pfad (P4) von dem zweiten unteren Tank (506) und zwischen der zweiten Gruppe von Trennwänden zu dem Kühlmittelauslass (420; 520) an dem zweiten oberen Tank (505) gerichtet ist.

2. Verdampfer nach Anspruch 1, **dadurch gekennzeichnet, dass** der zweite Pfad (P2, P2') des ersten Kerns (331; 401; 501) in zwei parallele Pfade geteilt ist, welche die gleiche Anzahl von Medienleitungen aufweisen.

3. Verdampfer nach Anspruch 1 oder 2, **dadurch gekennzeichnet, dass** die Anzahl von Medienleitungen in dem zweiten Pfad (P2, P2') des ersten Kerns (331; 401; 501) gleich oder größer als die Anzahl von Medienleitungen in dem ersten Pfad (P1) ist.

4. Verdampfer nach Anspruch 3, **dadurch gekennzeichnet, dass** die Anzahl von Medienleitungen in dem zweiten Pfad (P2, P2') des ersten Kerns bis zu zweimal der Anzahl von Medienleitungen in dem ersten Pfad (P1) beträgt.

5. Verdampfer nach einem der vorhergehenden Ansprüche, **dadurch gekennzeichnet, dass** der dritte Pfad (P3, P3') des zweiten Kerns (332; 402; 502) in zwei parallele Pfade geteilt ist, welche die gleiche Anzahl von Medienleitungen aufweisen.

6. Verdampfer nach Anspruch 1 oder 5, **dadurch gekennzeichnet, dass** die Anzahl von Medienleitungen in dem dritten Pfad (P3, P3') gleich oder größer als die Anzahl von Medienleitungen in dem vierten Pfad (P4) ist.

7. Verdampfer nach Anspruch 6, **dadurch gekennzeichnet, dass** die Anzahl von Medienleitungen in dem dritten Pfad (P3, P3') bis zu zweimal der Anzahl von Medienleitungen in dem vierten Pfad (P4) beträgt.

8. Verdampfer nach einem der vorhergehenden Ansprüche, **dadurch gekennzeichnet, dass** die Abmessungen aller Medienleitungen in dem ersten Kern (331; 401; 501) gleich sind.

9. Verdampfer nach einem der vorhergehenden Ansprüche, **dadurch gekennzeichnet, dass** die Abmessungen aller Medienleitungen in dem zweiten Kern (332; 402; 502) gleich sind.

10. Verdampfer nach Anspruch 9, **dadurch gekennzeichnet, dass** die Abmessungen der Medienleitungen in dem zweiten Kern (332; 402; 502) die Gleichen wie die Abmessungen der Medienleitungen in dem ersten Kern (331; 401; 501) sind.

11. Verdampfer nach einem der vorhergehenden Ansprüche, **dadurch gekennzeichnet, dass** die Anzahl der Medienleitungen in dem zweiten Kern (332; 402; 502) die Gleiche wie die Anzahl der Medienleitungen in dem ersten Kern (331; 401; 501) ist.

12. Verdampfer nach einem der vorhergehenden Ansprüche, **dadurch gekennzeichnet, dass** der Verdampfer zwei identische und gespiegelte Kerne umfasst.

13. Klimaanlageneinheit, die einen Verdampfer nach einem der Ansprüche 1 bis 12 umfasst.

14. Fahrzeug, das eine Klimaanlageneinheit nach Anspruch 13 umfasst.

## Revendications

1. Évaporateur (130 ; 230 ; 330 ; 430 ; 530) comprenant un premier noyau (331 ; 401 ; 501) ; et un deuxième noyau (332 ; 402 ; 502), le premier noyau (331 ; 401 ; 501) étant disposé en aval du et chevauchant le deuxième noyau (332 ; 402 ; 502) dans une direction d'écoulement d'air à travers l'évaporateur, le premier noyau (331 ; 401 ; 501) comprenant :
- un premier réservoir supérieur (503) à une première extrémité de l'évaporateur ;
- un premier réservoir inférieur (504) à une deuxième extrémité de l'évaporateur ;
- de multiples conduits (411, 421, 422) disposés en parallèle entre les premiers réservoirs supérieur et inférieur (503, 504), les conduits étant configurés pour raccorder les réservoirs supérieur et inférieur l'un à l'autre et pour permettre une communication fluidique entre les premiers réservoirs supérieur et inférieur ;
- une entrée de réfrigérant (410 ; 510) disposée à la première extrémité de l'évaporateur et raccordée au premier réservoir supérieur (503) ;
le deuxième noyau (332 ; 402 ; 502) comprenant :
- un deuxième réservoir supérieur (505) ;
- un deuxième réservoir inférieur (506) ;
- de multiples conduits (431, 432, 441) disposés en parallèle entre les deuxièmes réservoirs supérieur et inférieur (505, 506), les conduits étant configurés pour raccorder les réservoirs supérieur et inférieur l'un à l'autre et pour permettre une communication fluidique entre les réservoirs supérieur et inférieur ;
- le premier réservoir supérieur (503) étant raccordé au deuxième réservoir supérieur (505) pour permettre une communication fluidique entre les réservoirs supérieurs ; et
- une sortie de réfrigérant (420 ; 520) disposée à la première extrémité de l'évaporateur et raccordée au deuxième réservoir supérieur (505) ;
dans lequel
des cloisons sont disposées à l'intérieur des premier et deuxième réservoirs supérieurs (503, 505) ;
un premier ensemble de cloisons est configuré pour diviser le premier réservoir supérieur (503) en un premier chemin (P1) sur lequel un réfrigérant délivré par l'entrée de réfrigérant (410 ; 510) est dirigé du premier réservoir supérieur (503) au premier réservoir inférieur (504) ;
**caractérisé en ce qu'**un deuxième chemin (P2, P2'), en aval du premier chemin (P1), est dirigé du premier réservoir inférieur (504) au premier réservoir supérieur (503) sur chaque côté du premier chemin (P1),
**en ce qu'**un deuxième ensemble de cloisons est configuré pour diviser le deuxième réservoir supérieur (505) en un troisième chemin (P3, P3') sur lequel un réfrigérant délivré depuis le premier réservoir supérieur (503) est dirigé du deuxième réservoir supérieur (505) au deuxième réservoir inférieur (506) ;
**en ce que** le troisième chemin (P3, P3'), qui est en aval du deuxième chemin (P2, P2'), est dirigé du deuxième réservoir supérieur (505) au deuxième réservoir inférieur (506) sur chaque côté d'un quatrième chemin (P4) ; et
**en ce que** le quatrième chemin (P4) est dirigé depuis le deuxième réservoir inférieur (506) et entre le deuxième ensemble de cloisons jusqu'à la sortie de réfrigérant (420 ; 520) au niveau du deuxième réservoir supérieur (505).

2. Évaporateur selon la revendication 1, **caractérisé en ce que** le deuxième chemin (P2, P2') du premier noyau (331 ; 401 ; 501) est séparé en deux chemins parallèles ayant le même nombre de conduits de fluide.

3. Évaporateur selon la revendication 1 ou 2, **caractérisé en ce que** le nombre de conduits de fluide sur le deuxième chemin (P2, P2') du premier noyau (331 ; 401 ; 501) est égal ou supérieur au nombre de conduits de fluide sur le premier chemin (P1).

4. Évaporateur selon la revendication 3, **caractérisé en ce que** le nombre de conduits de fluide sur le deuxième chemin (P2, P2') du premier noyau représente jusqu'à deux fois le nombre de conduits de fluide sur le premier chemin (P1).

5. Évaporateur selon l'une quelconque des revendications précédentes, **caractérisé en ce que** le troisième chemin (P3, P3') du deuxième noyau (332 ; 402 ; 502) est séparé en deux chemins parallèles ayant le même nombre de conduits de fluide.

6. Évaporateur selon la revendication 1 ou 5, **caractérisé en ce que** le nombre de conduits de fluide sur le troisième chemin (P3, P3') est égal ou supérieur au nombre de conduits de fluide sur le quatrième chemin (P4).

7. Évaporateur selon la revendication 6, **caractérisé en ce que** le nombre de conduits de fluide sur le troisième chemin (P3, P3') représente jusqu'à deux fois le nombre de conduits de fluide sur le quatrième chemin (P4).

8. Évaporateur selon l'une quelconque des revendications précédentes, **caractérisé en ce que** les dimensions de tous les conduits de fluide dans le premier noyau (331 ; 401 ; 501) sont les mêmes.

9. Évaporateur selon l'une quelconque des revendications précédentes, **caractérisé en ce que** les dimensions de tous les conduits de fluide dans le deuxième noyau (332 ; 402 ; 502) sont les mêmes.

10. Évaporateur selon la revendication 9, **caractérisé en ce que** les dimensions des conduits de fluide dans le deuxième noyau (332 ; 402 ; 502) sont les mêmes que les dimensions des conduits de fluide dans le premier noyau (331 ; 401 ; 501).

11. Évaporateur selon l'une quelconque des revendications précédentes, **caractérisé en ce que** le nombre de conduits de fluide dans le deuxième noyau (332 ; 402 ; 502) est le même que le nombre de conduits dans le premier noyau (331 ; 401 ; 501).

12. Évaporateur selon l'une quelconque des revendications précédentes, **caractérisé en ce que** l'évaporateur comprend deux noyaux identiques et en miroir.

13. Unité de climatisation comprenant un évaporateur selon les revendications 1 à 12.

14. Véhicule comprenant une unité de climatisation selon la revendication 13.
